(19) **Europäisches Patentamt / European Patent Office / Office européen des brevets**

(11) **EP 1 459 048 B1**

(12) **EUROPÄISCHE PATENTSCHRIFT**

(45) Veröffentlichungstag und Bekanntmachung des Hinweises auf die Patenterteilung:
**01.08.2007 Patentblatt 2007/31**

(21) Anmeldenummer: **02776739.1**

(22) Anmeldetag: **30.09.2002**

(51) Int Cl.:
*G01N 3/30* (2006.01)    *G01C 9/00* (2006.01)

(86) Internationale Anmeldenummer:
**PCT/DE2002/003682**

(87) Internationale Veröffentlichungsnummer:
**WO 2003/056303 (10.07.2003 Gazette 2003/28)**

(54) **HÄRTEMESSGERÄT MIT EINEM GEHÄUSE UND EINEM EINDRINGKÖRPER, INSBESONDERE HANDGERÄT**

HARDNESS MEASURING DEVICE COMPRISING A HOUSING AND A PENETRATION BODY, IN PARTICULAR A MANUAL DEVICE

APPAREIL DE MESURE DE LA DURETE COMPORTANT UN ELEMENT D'INTRODUCTION, NOTAMMENT APPAREIL A MAIN

(84) Benannte Vertragsstaaten:
**AT BE BG CH CY CZ DE DK EE ES FI FR GB GR IE IT LI LU MC NL PT SE SK TR**

(30) Priorität: **21.12.2001 DE 10163656**

(43) Veröffentlichungstag der Anmeldung:
**22.09.2004 Patentblatt 2004/39**

(73) Patentinhaber: **Agfa NDT GmbH**
**D-50354 Hürth (DE)**

(72) Erfinder:
• **ANTHE, Enno**
**53332 Bornheim-Sechtem (DE)**
• **LAMMERICH, Werner**
**53721 Siegburg (DE)**

(74) Vertreter: **Bauer, Wulf et al**
**Bauer - Vorberg - Kayser**
**Patentanwälte**
**Lindenallee 43**
**50968 Köln (DE)**

(56) Entgegenhaltungen:
**WO-A-98/08073        DE-A- 4 234 277**
**DE-A- 19 514 848      US-A- 2 664 743**
**US-A- 4 470 293       US-A- 4 646 571**

• **DATABASE WPI Week 199841 Derwent Publications Ltd., London, GB; AN 1998-479834 XP002230756 "borehole slope inclinometer" & RU 2 105 952 C (CHEREMISOV), 1998**

EP 1 459 048 B1

**Beschreibung**

Die Erfindung bezieht sich auf ein Härtemessgerät mit einem Eindringkörper, der bei einem Messvorgang entlang eines Eindringvektors in ein Werkstück eindringt, mit einem Gehäuse, das eine Führungsbahn für den Eindringkörper ausbildet, der entlang dieser Führungsbahn zwischen einer Ruheposition und einer Messposition bewegbar ist und das weiterhin einen Kraftantrieb aufweist, mit dem der Eindringkörper zumindest in der Ruheposition in Verbindung ist und der bei einem Messvorgang entweder die Prüfkraft oder den Prüfimpuls bestimmt, und mit einer elektronischen Steuerschaltung, die den Messvorgang steuert und einen Härtewert aus der Bewegung und/oder dem Eindringverhalten des Eindringkörpers in das Werkstück ermittelt.

Aus dem Stand der Technik sind mehrere Härtemessgeräte bekannt, die entsprechend den Merkmalen des ersten Absatzes ausgeführt sind und auf die im folgenden näher eingegangen wird. Grundsätzlich kann man diese Geräte in zwei unterschiedliche Klassen aufteilen, nämlich einerseits Geräte für dynamische Härteprüfung und andererseits Geräte für statische Härteprüfung.

Aus US 4,411,153; US 3, 879, 982; US 5, 176, 026; DE 24 52 880 A und DE 195 14 848 sind dynamische Härteprüfgeräte bekannt, bei denen der Eindringkörper impulsartig so auf das zu prüfende Werkstück bewegt wird. Er schlägt am Ende eines Hinweges auf das Werkstück auf, prallt wieder von ihm zurück und führt einen Rückweg durchf. Die Bewegungsgrösse des Eindringkörpers, insbesondere seine Geschwindigkeit, wird während des Hinweges und während des Rückweges vorzugsweise berührungslos erfasst. Aus dem Unterschied der Bewegungsgrösse des Hinweges und derjenigen des Rückweges wird ein Mass für die Härte des Werkstückes erhalten. Bei diesen Geräten ist der Kraftantrieb zumeist eine Schnellfeder, die den Eindringkörper kurzfristig beschleunigt. Nach der Beschleunigungsphase wirkt die Schnellfeder nicht mehr, der Eindringkörper bewegt sich noch ein Stück ohne beschleunigt zu werden, bevor er auf das Werkstück auftrifft.

Bei den statischen oder auch quasistatischen Härtemessgeräten, wie sie beispielsweise aus US 3,572,097; US 4,646,571; US 5,092,175 und DE 198 12 026 A bekannt sind, ist eine Zug- oder Druckfeder permanent zwischen Gehäuse und Eindringkörper vorgesehen. Der Eindringkörper ragt mit seiner Eindringspitze aus dem Gehäuse vor. Diese wird auf das zu prüfende Werkstück in einem Berührungspunkt angesetzt. Nun wird die Prüfkraft aufgebracht, indem das Gehäuse zum Berührungspunkt hin gedrückt wird, also die Feder gespannt wird. Nach Erreichen eines gewissen Federweges ist die Prüfkraft erreicht und kann eine Härtemessung durchgeführt werden.

Zu Härteprüfverfahren wird noch auf DIN 50359 verwiesen.

Nachteilig bei allen diesen und ähnlichen Härtemessvorrichtungen ist nun folgendes: Die Härtemessgeräte können in unterschiedlicher Orientierung zum Gravitationsvektor an ein Werkstück angesetzt werden. Man kann beispielsweise über Kopf arbeiten, dann arbeitet man genau in Gegenrichtung zum Gravitationsvektor. Man kann seitlich das Gerät ansetzen, also etwa quer zum Gravitationsvektor usw.. Unter Gravitationsvektor wird ein Einheitsvektor verstanden, der vom Berührungspunkt aus die Richtung des Schwerefeldes anzeigt, im allgemeinen also zum Erdmittelpunkt gerichtet ist.

Der Eindringkörper hat eine eigene Masse. Sie liegt zumindest oder typischerweise im Bereich von einigen Gramm. Erfolgt das Eindringen des Eindringkörpers entlang des Eindringvektors parallel zum Gravitationsvektor, so liefert die Masse einen positiven Beitrag zur Prüfkraft (bei mehr oder weniger statischen Härtemessverfahren) bzw. zum Impuls (bei dynamischen Härtemessverfahren). Misst man dagegen über Kopf, ist der Eindringvektor also antiparallel zum Gravitationsvektor, so verringert die Masse des Eindringkörpers die Prüfkraft bzw. den Impuls. In Zwischenstellungen treten Zwischensituationen auf. Dabei ist auch noch die Masse starr mit dem Eindringkörper verbundener Teile und die Reibung des Eindringkörpers entlang seiner Führungsbahn zu berücksichtigen. Schliesslich ist auch der Beitrag der Masse einer Druckfeder bei statischen Messverfahren zu berücksichtigen.

Es ist grundsätzlich bekannt, dass die Richtung, in der ein Messgerät der eingangs genannten Art angesetzt wird, den Impuls des Eindringkörpers beeinflusst. Härtemessgeräten, die nach der genannten DE 198 12 026 A gefertigt werden, liefert der Hersteller eine Korrekturtabelle mit. Bei Durchführen einer Prüfung muss der Winkel zwischen Eindringvektor und Gravitationsvektor geschätzt bzw. bestimmt werden. Dann kann man in der Tabelle nachschauen, wie der von der elektronischen Steuerschaltung des Gerätes angezeigte Härtewert per Hand zu korrigieren ist. Dadurch wird zwar der Einfluss der Gravitation berücksichtigt, das Verfahren selbst ist aber umständlich, zeitraubend und nicht immer sehr genau.

Bei dem Härteprüfgerät nach der DE 195 14 848 wird die Bewegungsgrösse des Eindringkörpers auf dem Hinweg und auf dem Rückweg an jeweils mindestens zwei Orten gemessen. Dadurch ist es möglich, den gravitationsbedingten Einfluss auf die Bewegung des Eindringkörpers automatisch zu berücksichtigen.

Hier setzt nun die Erfindung ein. Sie hat es sich zur Aufgabe gemacht, einen weitgehend universell einsetzbaren Zusatz für ein Härtemessgerät der eingangs genannten Art anzugeben, mit dem automatisch ein Korrekturwert für einen ermittelten Härtemesswert erhalten wird. Vorzugsweise wird mittels des Korrekturwertes gleich die Härtemessung korrigiert durchgeführt und/oder es wird das zunächst gravitationstunabhängig ermittelte Härteergebnis so korrigiert und angezeigt, wie es nach Korrektur aussieht. ,

Diese Aufgabe wird gelöst durch das Härtemessgerät mit den Merkmalen des Anspruchs 1.

Diese erfindungsgemässe Lösung eignet sich insbesondere für Handgeräte, also Geräte, die klein bauen und daher universell an beliebigen Orten einsetzbar sind. Die Korrektur erfolgt in einem ersten Schritt durch automatisiertes Bestimmen des Winkels zwischen dem Eindringvektor und dem Gravitationsvektor. Hierzu wird der Beschleunigungssensor verwendet. Es gibt handelsübliche Bauteile, die die Winkellage zwischen einer Geräteachse und dem Gravitationsvektor angeben. Derartige Bauteile werden erfindungsgemäß benutzt. Der Beschleunigungssensor gibt ein Winkelsignal aus.

In einem zweiten Schritt wird dem ermittelten Winkel ein Korrekturwert automatisch zugeordnet. Dies kann durch Berechnung oder Nachschauen in einer gespeicherten Tabelle erfolgen. Mit dem Korrekturwert wird dann a) vorzugsweise gleich die Prüfkraft bzw. der Impuls verändert. Hierzu wird bei einem statischen Messverfahren die in der Zug- oder Druckfeder je nach ihrer jeweiligen Auslenkung vorliegende Kraft bestimmt und diejenige Kraft gewählt, die mit dem Korrekturwert verknüpft die gewünschte Prüfkraft ergibt. Bei dynamischen Messverfahren wird die Schnellfeder so beeinflusst, dass der Eindringkörper jeweils mit dem gleichen Impuls auf die Oberfläche des Werkstückes aufschlägt. So wird beispielsweise eine schwächere Einstellung der Schnellfeder gewählt, wenn man parallel zum Gravitationsvektor misst und es wird eine stärkere Einstellung der Schnellfeder gewählt, wenn man antiparallel zum Gravitationsvektor misst. Andere Ausdrücke für Schnellfeder sind Beschleunigungsfeder, Impulsfeder.

In einer bevorzugten Ausbildung ist der Kraftantrieb ein Motor, insbesondere ein Elektromotor, der zwischen Gehäuse und Eindringkörper angeordnet ist.

Es kann aber auch b) der jeweilige Härtewert bestimmt werden und dieser anschließend durch den Korrekturwert so korrigiert werden, wie es der Lage des Härtemessgerätes im Gravitationsfeld entspricht. Dann trifft beispielsweise bei dynamischen Messverfahren der Eindringkörper bei paralleler Ausrichtung zum Gravitationsvektor durchaus mit höheren Impuls auf das Werkstück auf als bei antiparalleler Ausrichtung. Insgesamt wird aber doch ein verlässlicher Härtewert ausgegeben, weil er eben korrigiert ist.

Die erfindungsgemäße Lösung eignet sich für alle Härtemessgeräte der eingangs genannten Art. Sie ist also nicht speziell nur für dynamische Härteprüfgeräte einsetzbar, wie beispielsweise dies für das Härteprüfgerät nach der DE 195 14 848 der Fall ist.

Bevorzugt ist das Härtemessgerät als Handgerät ausgebildet. Es hat die Form eine Griffels und kann bequem mit einer Hand ergriffen und bedient werden. Die Erfindung eignet sich insbesondre für derartige Handgeräte, die zum Einsatzort hingetragen werden. Die Härtemessung erfolgt dann nicht in einem Labor.

Weitere Vorteile und Merkmale der Erfindung ergeben sich aus den übrigen Ansprüchen sowie der nun folgenden Beschreibung von Ausführungsbeispielen der Erfindung, die unter Bezugnahme auf die Zeichnung im folgenden näher erläutert werden. In dieser Zeichnung zeigen:

    Fig. 1: ein Schnittbild durch ein Härtemessgerät, das nach dem UCI-Verfahren arbeitet und erfindungsgemäß ausgebildet ist, es befindet sich oberhalb eines Werkstücks,
    Fig. 2: eine Darstellung dreier in unterschiedlichen Richtungen zum Gravitationsvektor an ein Werkstück angesetzter Härtemessgeräte,
    Fig. 3: ein Schnittbild ähnlich Figur 1 durch ein dynamisches Härtemessgerät und
    Fig. 4: ein Schnittbild eines Härtemessgerätes mit Stellmotor.

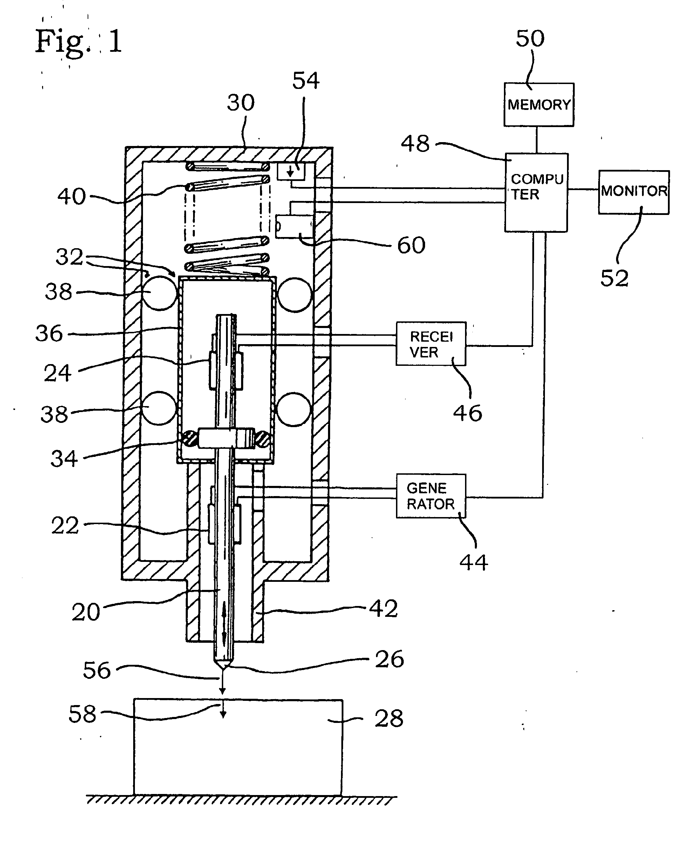

Das Härtemessgerät nach Figur 1 ist eine Weiterentwicklung des aus der eingangs genannten US 4,646,571 bekannten Härtemessgerätes. Auf die dortige Beschreibung wird verwiesen.

Das Härtemessgerät hat einen Eindringkörper 20, der hier als UCI-Schwingstab ausgebildet ist. Er wird durch piezoelektrische Elemente 22 zu Schwingungen angeregt, diese piezoelektrischen Elemente 22 sind mit ihm verbunden. Die Schwingungen werden über piezoelektrische Elemente 24 abgegriffen, diese sind ebenfalls mit dem Eindringkörper 20 verbunden. An seiner unteren, freien Spitze ist eine Eindringspitze 26 vorgesehen. Sie kommt bei einer Messung in Kontakt mit einem Werkstück 28.

Der Eindringkörper 20 ist im Wesentlichen von einem Gehäuse 30 umschlossen, das griffelartig ausgeführt ist. Lediglich am unteren, freien Ende ragt ein kleines Teilstück des Eindringkörpers 20 mit der Eindringspitze 26 aus dem Gehäuse vor. Das Gehäuse 30 bildet eine Führungsbahn 32 für den Eindringkörper 20 aus. Da der Eindringkörper 20 als Schwingstab ausgeführt ist, kann er nicht direkt geführt werden. Vielmehr ist er über elastische Mittel 34 in einem etwa becherförmigen Halteteil 36 angeordnet, das sich mit ihm bewegt. Das Halteteil ist über Rollmittel 38 gegenüber der Innenwand des Gehäuses 30 positioniert und geführt. Das Halteteil wiederum ist über eine Druckfeder 40, die in Verlängerung des stabförmigen Eindringkörpers 20 angeordnet ist, an der der Eindringspitze 26 gegenüberliegenden Innenwand des Gehäuses 30 abgestützt. Die Druckfeder drückt das Halteteil 36 in Anlage an einen rohrförmigen Bereich 42, der am unteren Endbereich des Gehäuses 30 ausgebildet ist. Die in Figur 1 dargestellte Position ist die Ruheposition.

Die piezoelektrischen Elemente 22 sind mit einem Sender 44 verbunden. Die piezoelektrischen Elemente 24 sind mit einem Empfänger 46 verbunden. Sender 44 und Empfänger 46 sind an eine Steuerschaltung 48, die im Wesentlichen als Computer ausgebildet ist, angeschlossen. Diese wiederum hat einen Speicher 50, mit dem sie verbunden ist, und einen Monitor 52. Der Steuerschaltung 48 können über eine (nicht dargestellte) steckverbindbare Tastatur Daten eingegeben werden, die dann im Speicher 50 gespeichert werden. Auf diese Weise kann beispielsweise eine gewünschte Prüfkraft, z. B. eine Nenn-Prüfkraft oder eine elastische Kraft Fe der Feder vorgegeben werden.

Mit dem Gehäuse fest verbunden ist ein Beschleunigungssensor 54. Verwendet wird hier beispielsweise ein Sensor vom Typ ADXL 105 der Firma Analog Devices. Dieser Sensor hat eine Auflösung von 2 mg (g = Erdbeschleunigung). Der Sensor ist so angeordnet, dass es bei paralleler Ausrichtung des Eindringkörpers 20 zum lokalen Gravitationsvektor 56 die Anzeige 1g liefert. Wird er um 180° gedreht, liefert er die Anzeige -1 g. Der lokale Gravitationsvektor 56 für eine konkrete Messung ist der Einheitsvektor, der von der Eindringspitze 26 zum Zentrum der Gravitation der Erde zeigt.

Anstelle des konkreten genannten Beschleunigungssensors kann auch ein Pendel oder ein Kugelkörper mit sehr exzentrischer Masseverteilung eingesetzt werden, der kardanisch gelagert ist. Der jeweilige Zustand wird durch geeignete Mittel, die optisch, magnetisch oder elektromagnetisch arbeiten können, abgefragt.

Bei einer konkreten Messung kommt die Eindringspitze 26 in Kontakt mit dem Werkstück 28 und dringt in dieses ein. Die Richtung dieses Eindringens wird als Eindringvektor 58 bezeichnet. Dieser Eindringvektor 58 wird als parallel zum länglichen Eindringkörper angenommen. Es kann aber Anwendungsfälle geben, in denen die Längsachse des Gehäuses 30 und der Eindringvektor 58 zumindest geringfügig auseinander fallen.

Bei einer Messung wird eine Prüfkraft aufgebracht, die als Reaktionskraft in der Hand eines Benutzers des Härtemessgerätes vorliegt. Bei der Prüfung wird die Feder 40 gespannt, sie bestimmt einen Teil der Nenn-Prüfkraft. Den anderen Teil bestimmen die Masse des Eindringkörpers 20 und die mit ihm bewegungsverbundenen Teile, einschließlich eines Teils der Feder 40, sowie die Reibung. Die Nenn-Prüfkraft setzt sich also aus einem Teil zusammen, den der Kraftantrieb, hier also die Druckfeder 40, liefert, und einem Teil, der im wesentlichen durch die Masse der unmittelbar an der Messung beteiligten Teile, insbesondere Eindringkörper 20, geliefert wird. Letzterer Anteil kann positiv und negativ sein. Er ist abhängig von der Richtung im Schwerefeld.

Während der Messung verschieb sich der Eindringkörper so relativ zum Gehäuse 30 entlang der Führungsbahn von der in Figur 1 dargestellten Ruheposition in eine Messposition, die während der Messung vorliegt. Im Gehäuse 30 und der Feder 40 unmittelbar benachbart ist ein Weggeber 60 vorgesehen, der die Auslenkung des Eindringkörpers 20 aus der in Figur 1 dargestellten Ruheposition erfasst. Er ist als Hallsonde ausgebildet. Er erfasst die einzelnen Windungen der Feder, die sich in unmittelbarer Nähe von ihm bewegen. Andere Ausbildungen des Weggebers sind möglich. So kann er beispielsweise optoelektronisch einen Strichcode abtasten, kann als induktiver Wegeber ausgebildet sein usw..

Der Weggeber 60 und auch der Beschleunigungssensor 54 sind mit der Steuerschaltung 48 verbunden. Diese hat damit sowohl eine Information über den Zustand der Feder 40, also der in der Feder vorliegenden Spannung und über die Lage des Gehäuses 30 im Raum, konkret über den Winkel zwischen dem Eindringvektor 58 und dem Gravitationsvektor 56. In Figur 1 ist dieser Winkel 0°.

Das Gehäuse 30 des Härtemessgerätes wird bei Durchführung einer Härtemessung vom Benutzer so stark gegen das Werkstück 28 gedrückt, bis entweder eine voreingestellte elastische Federkraft Fe oder eine Nenn-Prüfkraft Fn erreicht ist. Beide Arbeitsweisen werden unter Bezugnahme auf das Ausführungsbeispiels 1 im Folgenden beschrieben. Zunächst wird die Durchführung einer Prüfung mit vorgegebener Nenn-Prüfkraft beschrieben.

Aufgrund des Signals des Beschleunigungssensors 54 hat die Steuerschaltung 48 eine Information darüber, in welcher Raumlage der Eindringkörper 20 in das Werkstück 28 eindringt, wie also der Eindringvektor 58 zum Gravitationsvektor 56 gerichtet ist. Die Masse der bewegten Teile im Härteprüfgerät ist bekannt, kann jedenfalls gemessen werden. Hierzu gehören die Masse des Eindringkörpers 20 mit seinen Elementen 22, 24, anteilig die elektrischen Anschlussleitungen, weiterhin die elastischen Mitteln 34, das Halteteil 36, ein Teil der Massen der Rollmittel 38 und ein Teil der Masse der Feder 40. Diese Gesamtmasse wirkt bei der Orientierung des Messgerätes gemäß Fig. 1 additiv zur elastischen, in der Feder 40 vorliegenden Kraft Fe. Würde man Figur 1 um 180° quer zur Zeichenebene drehen, würde die Masse subtraktiv wirken. In den Zwischenstellungen wirkt die Masse anteilig in Abhängigkeit vom Winkel, konkret vom Kosinus des Winkels.

Zusätzlich zum Masseanteil kommt eine Reibung hinzu, die im Bereich der Rollmittel 38 auftritt. Die Energie, also Kraft mal Weg, mit der das Gehäuse 30 des Messgerätes gegen das Werkstück 28 bewegt wird, wird auch zum geringen Teil in Reibungswärme umgesetzt.

Bei der Ausrichtung des Messgerätes 18 parallel zum Gravitationsvektor 56, wie in Figur 1 dargestellt, addieren sich die massebedingten Kräfte und die Reibungskräfte, im Folgenden zusammen als Nebenkraft Fo bezeichnet, zur elastischen Kraft Fe der Feder 40. Um eine vorgegebene Nennkraft Fn zu erreichen, muss die elastische Kraft Fe in der Feder daher geringer sein als beispielsweise bei einer um 180° gekippten Position des Messgerätes.

Macht man konstruktiv die Reibung sehr klein und vernachlässigt die Abhängigkeit der Reibung von der Lage im Gravitationsfeld, so kann man ansetzten

$$Fn = Fe + Fo * \cos alpha$$

mit Fn = Nennkraft, Fe = elastisch aufgebrachte Kraft, Fo = bewegte Masse dividiert durch g plus Anteil der Reibungskraft, sowie

alpha = Winkel zwischen Eindringvektor 58 und Gravitationsvektor 56.

In der Steuerschaltung wird die Nennkraft Fn für jeden konkreten Messvorgang, also jeden konkreten Winkel alpha, ermittelt. Eine Messung wird so durchgeführt, dass die elastischen Kraft Fe von einem kleinen Anfangswert beginnend ansteigt. Ist der Anstieg so weit, dass die Nennprüfkraft Fn erreicht ist, wird die aktuelle Schwingfrequenz des Eindringkörpers 20 abgelesen, erfolgt also eine Härtemessung.

Nun wird die Durchführung einer Prüfung mit vorgegebener elastischer Kraft Fe der Feder 40 beschrieben:

Die Prüfung läuft ab wie oben beschrieben. Die Messung wird ausgelöst, also die Härtemessung durchgeführt, wenn die elastische Kraft Fe in der Feder 40 einen vorgegebenen, voreingestellten Wert erreicht hat, unabhängig von der Orientierung des Härtemessgerätes im Raum. Aus der Abweichung der Schwingfrequenz gegenüber dem Ausgangszustand wird ein Härtewert erhalten. Dieser wird nun im nachhinein korrigiert. Hierzu wird aus der obigen Formel die zur elastischen Kraft Fe zugehörige Nennkraft Fn berechnet unter Berücksichtigung des Winkels alpha des Messgerätes zum Gravitationsvektor 56. In einfachster Näherung wird der zunächst ermittelte Härtewert multipliziert mit dem Quotienten aus Fn und Fe. In verbesserter Ausführung wird eine Tabelle, die im Speicher 50 gespeichert ist, herangezogen und die Umrechnung auf den Nenn-Härtewert durchgeführt. Dieser wird dann im Monitor 52 angezeigt.

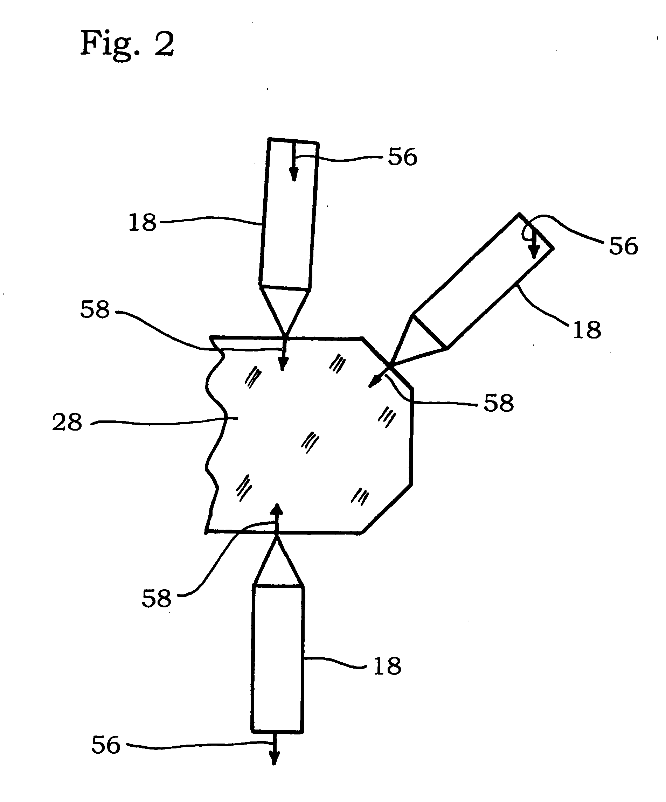

Figur 2 zeigt drei baugleiche Härtemessgeräte 18, die in drei unterschiedlichen Positionen an ein Werkstück 28 angesetzt sind. Das in der Figur am weitesten oben befindliche Härtemessgerät 18 greift nahezu parallel zur vertikalen Richtung, also zum Gravitationsvektor 56 an. Eindringvektor 58 und Gravitationsvektor 56 schliessen einen sehr kleinen Winkel ein, der etwa bei 3° liegt. Bei der genannten Auflösung des Beschleunigungssensors ist bereits bei diesen kleinen Winkeln eine Korrektur durchführbar.

Ein zweites Härtemessgerät greift in einem Winkel von etwa 45° zur Vertikalen an. Hier ist die Korrektur bereits deutlich spürbar, jedenfalls erheblich grösser als im erstgenannten Fall.

Das dritte, unten in der Figur befindliche Härtemessgerät 18 greift über Kopf an. Hier verlaufen Beschleunigungssensor 54 und Eindringvektor 58 in Gegenrichtung, sind also 180° zueinander orientiert. In diesem Fall wirkt der Massebeitrag des Eindringkörpers 20 einschliesslich der mit ihm zusammenhängenden Bauteile genau in Gegenrichtung wie bei Ausrichtung entsprechend Figur 1. Die Reibungsverhältnisse sind aber im wesentlichen so wie bei paralleler Ausrichtung der beiden Vektoren 56, 58. Dagegen muss bei schräger Ausrichtung, wie z. B. für das mittlere Messgerät mit 45°-Orientierung, im allgemeinen auch die Winkelabhängigkeit der Reibung berücksichtigt werden.

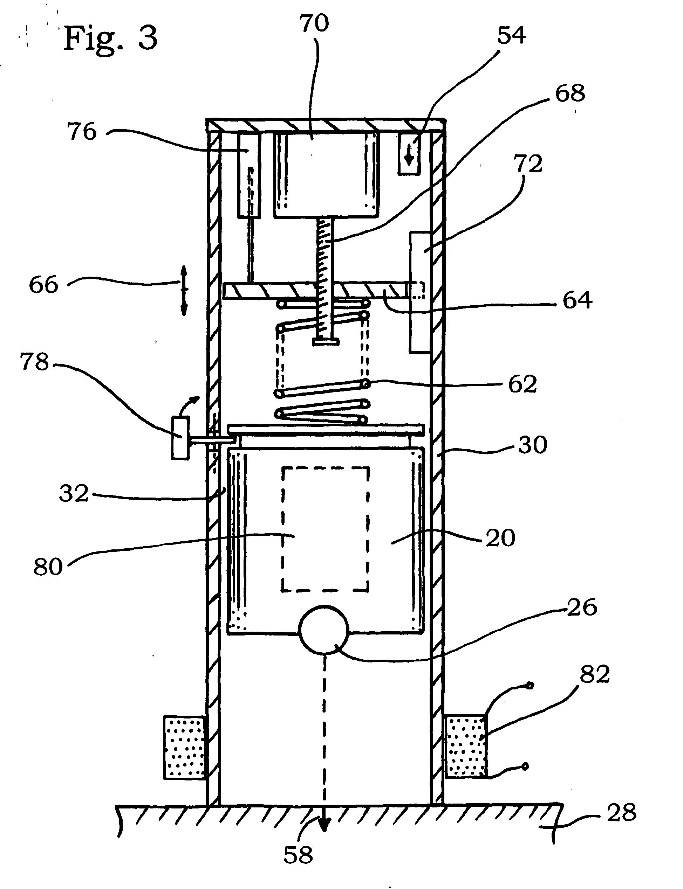

Figur 3 zeigt ein Beispiel für ein Gerät für dynamische Härteprüfung. Das Gerät hat ein im wesentlichen rohrförmiges Gehäuse 30, in dem sich ein Eindringkörper 20 entlang einer Führungsbahn 32 im wesentlichen frei bewegen kann. Die Bewegung erfolgt entlang des gestrichelten Weges, der sowohl für den Hinweg als auch für den Rückweg gilt. Die Eindringspitze 26 wird von einer Kugel gebildet.

Der Eindringkörper 20 wird von einer Feder 62 beaufschlagt, die hier als kurze Druckfeder ausgeführt ist. Sie ist nicht mit dem Eindringkörper 20 verbunden, sondern berührt diesen nur. Sie ist allerdings mit einer Stellplatte verbunden, die entlang des Doppelpfeils 66 verschiebbar ist. Hierzu hat sie ein zentrisches Gewinde, das von einer Gewindestange 68 durchgriffen wird. Die Gewindestange 68 wird von einem Elektromotor 70 angetrieben. Durch ein Widerlager 72, das in einen Schlitz der Stellplatte 64 greift, wird sichergestellt, dass die Stellplatte 64 sich nicht drehen kann. Die Position der Stellplatte 64 wird durch einen zweiten Weggeber 76 abgefragt. Es ist ein Beschleunigungssensor 54 vorgesehen.

Je nach lichtem Abstand zwischen der Stellplatte 64 und dem Eindringkörper 20 wird die Feder 62 mehr oder weniger vorgespannt. Der Eindringkörper 20 ist in der dargestellten Ruheposition des Messgerätes durch einen schwenkbaren Stift, der einen Auslöser 68 bildet, gesichert. Wird ein aussenliegender Bereich des Auslösers 68 im Sinne des Pfeils verschwenkt, wird der Eindringkörper 20 freigegeben. Er wird durch die Feder 62 beschleunigt, verliert aber nach kurzer Wegstrecke den Kontakt mit der Feder und fliegt danach im wesentlichen frei weiter. Seine Eindringspitze 26 dringt entlang des Eindringvektors 58 in das Werkstück 28 ein. Aus dem Unterschied zwischen den Bewegungsgrössen des Hinweges und des Rückweges wird ein Härtewert ermittelt.

Auch bei diesem Messgerät gemäss Figur 3 kann man nun die Vorspannung der Schnellfeder 62 vor Auslösen des schwenkbaren Stiftes 68 der jeweiligen Orientierung des Messgerätes im Raum anpassen. Der Motor wird solange betätigt, bis die Vorspannung in der Beschleunigungsfeder zuzüglich der lageabhängigen Beiträge zum Impuls einen konstanten Nennimpuls liefern. Will man also beispielsweise das in Figur 3 für eine Anordnung mit parallelen Vektoren 56, 58 dargestellte Messgerät nach Drehung um 180° über Kopf einsetzen, muss zum Erreichen des gleichen Nennimpulses die Feder 62 stärker vorgespannt werden, also der Abstand zwischen Stellplatte 64 und Eindringkörper 20 verringert werden.

In bekannter Weise hat das Messgerät einen im Eindringkörper 20 angeordneten Magneten 70. Er arbeitet mit einer Induktionsspule 72 zusammen, die aussen am Gehäuse 30 angeordnet ist.

Auch das Messgerät nach Figur 3 kann man so betreiben, dass die in der Feder 62 gespeicherte Kraft stets dieselbe ist. Dann kompensiert der Motor nicht mehr unmittelbar die Federkraft, wenn man das Messgerät im Raum bewegt. Die Korrektur erfolgt vielmehr anschliessend, wie dies oben für das quasi statische Härtemessverfahren beschrieben wurde.

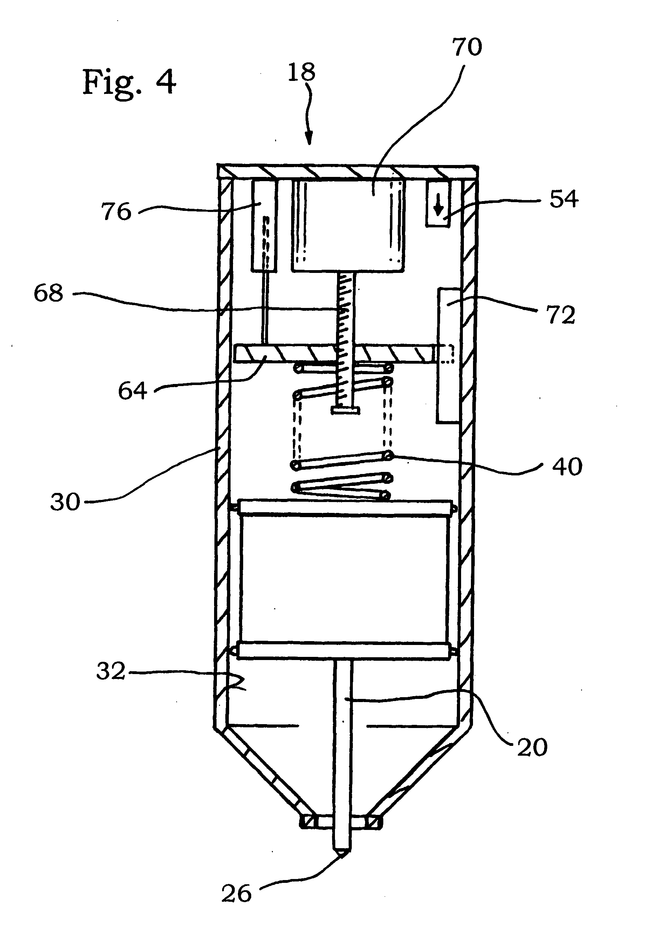

Figur 4 schliesslich zeigt ein Härtemessgerät, mit dem statische Härtemessungen durchführbar sind. Eine Feder 40, die wiederum als Druckfeder ausgeführt ist, ist einerseits mit der Stellplatte 64 und andererseits mit dem Eindringkörper 20 dauerhaft verbunden, kommt also nicht von beiden frei.

Hierin liegt ein Unterschied zum Gerät nach Figur 3. Der Eindringkörper 20 ist entlang einer Führungsbahn 32 im griffelförmigen Gehäuse 30 in Axialrichtung verschiebbar, die Reibung ist möglichst klein gehalten. Der Eindringkörper 20 hat an seinem untersten Ende eine Eindringspitze 26. In Figur 4 ist der Ruhezustand gezeigt. Die Feder 40 bewirkt, dass die Eindringspitze 26 um ein gewisses Mass frei aus dem unteren, verjüngten Ende des Gehäuses 30 vorragt.

Das Gerät nach Figur 4 kann in verschiedenen Arbeitsweisen betrieben werde, diese werden nun erläutert.

In einer ersten Variante wird der Elektromotor während einer Messung nicht betätigt. Bei einer Messung wird die Eindringspitze 26 auf ein (nicht dargestelltes) Werkstück aufgesetzt und das Gehäuse 30 zum Berührungspunkt hin gedrückt. Dadurch wird die Feder 40 mehr und mehr zusammengedrückt, bis eine elastische Kraft Fe erreicht ist, bei der eine Messung durchgeführt wird. Die Auslenkung der Feder kann über den Weggeber 76 ermittelt werden, da beim Zusammenpressen der Feder 40 die Stellplatte 64 verformt wird. Gegebenenfalls kann auch ein Hallsensor wie im Ausführungsbeispiel nach Figur 1 der Feder 40 zugeordnet werden. Der erhaltene Messwert wird lageabhängig korrigiert durch das Signal des Beschleunigungssensors 54.

Das Messgerät nach Figur 4 kann aber auch so betrieben werden, dass die Kompression der Feder 40 durch den Elektromotor 70 erfolgt. Nach Ansetzen der Eindringspitze 26 auf ein Werkstück wird der Motor 70 betätigt, er komprimiert die Feder 40, wodurch der Benutzer eine Reaktionskraft spürt. Der Benutzer muss nun nicht mehr die Prüfkraft gezielt aufbringen, sondern nur noch reagieren.

In einer anderen Variante ist es möglich, dass bei Erreichen der vorgegebenen elastischen Kraft Fe, die der gewünschten Nenn-Prüfkraft bei der konkreten Orientierung im Raum zugeordnet ist, der Motor 70 angesteuert wird und die Stellplatte 64 zu sich bewegt. Dadurch spürt ein Benutzer des Gerätes, dass nun die gewünschte Nenn-Prüfkraft erreicht ist.

Die Aussenabmessungen des Gehäuses 30 sind so gewählt, dass das Gehäuse von einer Hand gehalten werden kann. Typischerweise ist das Gehäuse im wesentlichen zylindrisch mit einem Durchmesser zwischen 30 und 80 mm. Der Aussenmantel des Gehäuses ist als Griffbereich ausgebildet.

## Patentansprüche

1. Härtemessgerät (18)
   mit a) einem Eindringkörper (20), der bei einem Messvorgang entlang eines Eindringvektors (58) in ein Werkstück (28) eindringt,
   mit b) einem Gehäuse (30),

   - das eine Führungsbahn (32) für den Eindringkörper (20) ausbildet, der entlang dieser Führungsbahn (32) zwischen einer Ruheposition und einer Messposition bewegbar ist und
   - das weiterhin einen Kraftantrieb (40, 62, 70) aufweist, mit dem der Eindringkörper (20) zumindest in der Ruheposition in Verbindung ist und der bei einem Messvorgang entweder die Prüfkraft oder den Prüfimpuls bestimmt, und

   mit c) einer elektronischen Steuerschaltung (48), die den Messvorgang steuert und einen Härtewert aus der Bewegung und/oder dem Eindringverhalten des Eindringkörpes (20) in das Werkstück (28) ermittelt, **dadurch gekennzeichnet, dass** das Härtemessgerät (18) einen Beschleunigungssensor (54) aufweist, der ein Winkelsignal abgibt, das abhängig ist von dem Winkel, den der Eindringvektor (58) mit dem lokalen Gravitationsvektor (56) einschliesst und dass dieses Winkelsignal in der Steuerschaltung (48) vorliegt, die unter Berücksichtigung der bekannten Masse des Eindringkörpers (20) und damit verbundener Teile einen Korrekturwert für eine konkrete Härtemessung errechnet.

2. Härtemessgerät (18) nach Anspruch 1, **dadurch gekennzeichnet, dass** es als Handgerät ausgebildet ist, und dass am Gehäuse (30) ein Griffbereich vorgesehen ist, der es ermöglicht, das Gehäuse (30) mit einer Hand zu greifen.

3. Härtemessgerät (18) nach Anspruch 1, **dadurch gekennzeichnet, dass** der Kraftantrieb eine Feder, insbesondere eine Druckfeder (40) ist, die sich mit einem Ende am Gehäuse (30) abstützt, mit dem anderen Ende am Eindringkörper (20) angeordnet ist, dass die Prüfkraft, mit der der Eindringkörper (20) in das Werkstück (28) eingedrückt wird, im wesentlichen der Kraft entspricht, mit der die Druckfeder (40) zusammengedrückt ist und dass der Eindringkörper (20) in Ruheposition und in Messposition frei aus dem Gehäuse (30) vorragt.

4. Härtemessgerät (18) nach Anspruch 1, **dadurch gekennzeichnet, dass** der Kraftantrieb eine Schnellfeder (62) ist, die bei Auslösen eines Messvorganges den Eindringkörper (20) beschleunigt, sodass er mit einem Impuls auf das Werkstück (28) auftrifft.

5. Härtemessgerät (18) nach Anspruch 1, **dadurch ge-**

**kennzeichnet, dass** der Kraftantrieb ein Motor, insbesondere ein Elektromotor (70) ist, der zwischen Gehäuse (30) und Eindringkörper (20) angeordnet ist.

6. Härtemessgerät (18) nach Anspruch 3, **dadurch gekennzeichnet, dass** ein Weggeber (60) vorgesehen ist, der eine Verschiebung des Eindringkörpes (20) relativ zum Gehäuse (30), insbesondere die Auslenkung der Feder, erfasst und der vorzugsweise als Hallsonde ausgebildet ist.

7. Härtemessgerät (18) nach Anspruch 3, **dadurch gekennzeichnet, dass** ein Messvorgang dann ausgelöst wird, wenn die elastische Kraft, mit der die Feder gespannt ist und die Kraft, mit der der Eindringkörper (20) aufgrund seiner Masse auf das Werkstück (28) einwirkt, zusammen einen vorbestimmten Wert, z. B. die Nenn-Prüfkraft, erreicht haben.

8. Härtemessgerät (18) nach Anspruch 7, **dadurch gekennzeichnet, dass** ein mechanischer Auslöser (78) vorgesehen ist, der die Feder dann entspannt, wenn die Nenn-Prüfkraft erreicht ist.

9. Härtemessgerät (18) nach Anspruch 1, **dadurch gekennzeichnet, dass** die Steuerschaltung (48) einen Speicher (50) aufweist, in der in Abhängigkeit vom Winkel zum Gravitationsvektor (56) der Beitrag der Masse des Eindringkörpes (20) zur Prüfkraft und der Beitrag der Reibung des Eindringkörpes (20) entlang seiner Führungsbahn (32) aufgelistet ist.

10. Härtemessgerät (18) nach Anspruch 4, **dadurch gekennzeichnet dass** der Schnellfeder (62) eine Stelleinrichtung (64, 68, 70) zugeordnet ist, die für einen konkreten Messvorgang die Schnellfeder (62) vorspannt, dass die Vorspannung der Schnellfeder (62) abhängig von der Orientierung den Eindringvektors (58) ist und dass unabhängig von der Orientierung des Eindringvektor (58) der Impuls, mit dem der Eindringkörper (20) auf das Werkstück (28) aufschlägt, einen vorgegeben Wert hat.

**Claims**

1. A hardness measuring device comprising:

   a penetration body that penetrates a work piece along a penetration vector during a measuring process;
   a housing, the housing comprises a guide track means for guiding the penetration body, the penetration body being moveable along the guide track means between a rest position and a measuring position,
   and the housing further comprises a mechanical drive that is in engagement with the penetration body at least in the rest position and the mechanical drive determines either a test force or a test impulse during a measuring process; and an electronic control circuit that controls the measuring process and that calculates a hardness value from the movement and/or the penetration behavior into the work piece of the penetration body, wherein the hardness measuring device comprises an acceleration sensor, the acceleration sensor produces an angular signal, depending on the angle that the penetration vector makes with a local gravitational vector and the angular signal is input into the control circuit, the control circuit calculates a correction value for a precise hardness measurement, taking into consideration a known mass of the penetration body and of the parts connected thereto.

2. The hardness measuring device of claim 1, wherein the hardness measuring device is a handheld device and a grip region is provided on the housing, the grip region permitting the housing to be gripped in one hand.

3. The hardness measuring device of claim 1, wherein the mechanical drive comprises a spring that rests against the housing at one end of the spring and is disposed on the penetration body at the other end of the spring, the test force with which the penetration body is pressed into the work-piece substantially corresponds to a force with which the spring is compressed and the penetration body freely protrudes from the housing in the rest position and in the measuring position.

4. The hardness measuring device of claim 1, wherein the mechanical drive is an impulse spring that accelerates the penetration body when a measuring process is being initiated, the penetration body strikes the work piece with an impulse when a measuring process is performed.

5. The hardness measuring device of claim 1, wherein the mechanical drive is a motor, and the motor is disposed between the housing and the penetration body.

6. The hardness measuring device of claim 3, further comprising an encoder that senses a displacement of the penetration body relative to the housing.

7. The hardness measuring device of claim 3, wherein a measuring process is initiated when the elastic force that biases the spring and the force the penetration body exerts onto the work piece due to the mass of the penetration body added together yield a predetermined value, e.g., the nominal test force.

**8.** The hardness measuring device of claim 7, wherein a mechanical release means is provided that releases the spring when the nominal test force has been achieved.

**9.** The hardness measuring device of claim 1, wherein the control circuit comprises a memory that stores a listing of values comprising the mass of the penetration body that contributes to the test force, as a function of the angle the penetration vector makes with the gravitational vector, and the friction of the penetration body along its guide track that contributes to the test force, as a function of the angle the, penetration vector makes with the gravitational vector.

**10.** The hardness measuring device of claim 4, wherein an adjusting mechanism is associated with the impulse spring, said adjusting mechanism biasing the impulse spring for a specific measuring process, the bias of the impulse spring depends on the orientation of the penetration vector and, independent of the orientation of the penetration vector, the impulse "with" which the penetration body strikes the work piece has a prescribed value.

**11.** The hardness measuring device of claim 1, wherein the mechanical drive is a compression spring, that rests against the housing at one end and is disposed on the penetration body at the other end, the test force with which the penetration body is pressed into the work piece substantially corresponds to a force with which the compression spring is compressed and the penetration body freely protrudes from the housing in the rest position and in the measuring position.

**12.** The hardness measuring device of claim 1, wherein the mechanical drive is an electric motor, the electric motor is disposed between the housing and the penetration body.

**13.** The hardness measuring devise of claim 3, further comprising an encoder that senses a deflection of the spring and wherein the encoder is a Hall probe.

**Revendications**

**1.** Appareil de mesure de dureté (18) comprenant

a. un corps de pénétration (20) qui, lors d'un processus de mesure, pénètre dans une pièce (28) le long d'un vecteur de pénétration (58),
b. un boîtier (30)

- qui forme une glissière (32) pour ledit corps de pénétration (20) lequel est déplaçable le long de cette glissière (32) entre une position de repos et une position de mesure, et
- qui, en outre, présente un entraînement mécanique (40, 62, 70) avec lequel ledit corps de pénétration (20) est en communication au moins dans la position de repos et qui, lors d'un processus de mesure, détermine soit la force de contrôle soit l'impulsion de contrôle,

et

c. un circuit électronique de commande (48) qui commande le processus de mesure et détermine une valeur de dureté à partir du mouvement et/ou du comportement de pénétration du corps de pénétration (20) dans la pièce (28),

**caractérisé par le fait que** l'appareil de mesure de dureté (18) présente un capteur d'accélération (54) qui fournit un signal d'angle qui dépend de l'angle que forme le vecteur de pénétration (58) avec le vecteur gravitationnel local (56), et que ce signal d'angle est présent dans le circuit de commande (48) qui, en considération de la masse connue du corps de pénétration (20) et de pièces y liées, calcule une valeur de correction pour une mesure concrète de dureté.

**2.** Appareil de mesure de dureté (18) selon la revendication 1,
**caractérisé par le fait qu'**il est réalisé comme appareil à main, et qu'une zone de prise est prévue sur ledit boîtier (30), qui permet de saisir le boîtier (30) d'une seule main.

**3.** Appareil de mesure de dureté (18) selon la revendication 1,
**caractérisé par le fait que** l'entraînement mécanique est un ressort, en particulier un ressort de pression (40) qui prend appui sur le boîtier (30) avec l'une des extrémités et est disposé sur le corps de pénétration (20) avec l'autre extrémité, que la force de contrôle avec laquelle on fait pénétrer le corps de pénétration (20) dans ladite pièce (28) correspond pour l'essentiel à la force avec laquelle le ressort de pression (40) est comprimé, et que, dans la position de repos et dans la position de mesure, le corps de pénétration (20) saille librement du boîtier (30).

**4.** Appareil de mesure de dureté (18) selon la revendication 1,
**caractérisé par le fait que** ledit entraînement mécanique est un ressort déclencheur (62) qui, lorsqu'un processus de mesure est déclenché, accélère le corps de pénétration (20) de sorte qu ' il donne avec une impulsion contre la pièce (28).

**5.** Appareil de mesure de dureté (18) selon la revendication 1,

**caractérisé par le fait que** l'entraînement mécanique est un moteur, en particulier un moteur électrique (70) qui est disposé entre le boîtier (30) et le corps de pénétration (20).

6. Appareil de mesure de dureté (18) selon la revendication 3,
**caractérisé par le fait que** l'on prévoit un capteur de déplacement (60) qui détecte un déplacement du corps de pénétration (20) par rapport au boîtier (30), en particulier la déviation du ressort, et qui est réalisé de préférence en tante que sonde de Hall.

7. Appareil de mesure de dureté (18) selon la revendication 3,
**caractérisé par le fait qu'**un processus de mesure est déclenché lorsque la force élastique avec laquelle ledit ressort est tendu et la force avec laquelle le corps de pénétration (20) agit, dû à sa masse, sur ladite pièce (28) ont atteint ensemble une valeur prédéterminée, par exemple la force nominale de contrôle.

8. Appareil de mesure de dureté (18) selon la revendication 7,
**caractérisé par le fait que** l'on prévoit un déclencheur mécanique (78) qui détend ledit ressort lorsque la force nominale de contrôle est atteinte.

9. Appareil de mesure de dureté (18) selon la revendication 1,
**caractérisé par le fait que** ledit circuit de commande (48) présente une mémoire (50) dans laquelle sont listées, en fonction de l'angle par rapport au vecteur gravitationnel (56), la contribution de la masse du corps de pénétration (20) à la force de contrôle ainsi que la contribution de la friction du corps de pénétration (20) le long de sa glissière (32).

10. Appareil de mesure de dureté (18) selon la revendication 4,
**caractérisé par le fait qu'**au ressort déclencheur (62) est associé un dispositif de rappel (64, 68, 70) qui précontraint ledit ressort déclencheur (62) pour un processus concret de mesure, que la précontrainte du ressort déclencheur (62) est fonction de l'orientation du vecteur de pénétration (58) et que, indépendamment de l'orientation du vecteur de pénétration (58), l'impulsion avec laquelle le corps de pénétration (20) donne contre la pièce (28) présente une valeur donnée.

# Fig. 1

EP 1 459 048 B1

# Fig. 2

11

# Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4411153 A
- US 3879982 A
- US 5176026 A
- DE 2452880 A
- DE 19514848
- US 3572097 A
- US 4646571 A
- US 5092175 A
- DE 19812026 A